# EUROPEAN PATENT SPECIFICATION

(11) **EP 3 479 258 B1**
(45) Date of publication and mention of the grant of the patent: **15.05.2024**
(21) Application number: 17820820.3
(22) Date of filing: 31.05.2017
(51) Int. Cl.: G06F 3/06, G06F 16/00, H04L 41/5009, H04L 41/5025, H04L 43/0817, G06F 11/30, G06F 11/34

(54) **TECHNOLOGIES FOR PROVIDING DYNAMICALLY MANAGED QUALITY OF SERVICE IN A DISTRIBUTED STORAGE SYSTEM**
TECHNOLOGIEN ZUR BEREITSTELLUNG VON DYNAMISCH VERWALTETER DIENSTQUALITÄT IN EINEM VERTEILTEN SPEICHERSYSTEM
TECHNOLOGIES POUR FOURNIR UNE QUALITÉ DE SERVICE GÉRÉE DE MANIÈRE DYNAMIQUE DANS UN SYSTÈME DE STOCKAGE RÉPARTI

(30) Priority: 30.06.2016 US 201615197948
(43) Date of publication of application: 08.05.2019
(73) Proprietor: INTEL Corporation, Santa Clara, CA 95054 (US)
(72) Inventor: GANGULI, Mrittika, Munnekolalu Village Bangalore 560064 (IN); NARAYAN, Ananth S., Bangalore 460103 (IN); CHAGAM REDDY, Anjaneya R., Chandler, AZ 85226 (US); KUMAR, Mohan J., Aloha, OR 97007 (US)
(74) Representative: Rummler, Felix
(86) International application number: PCT/US2017/035198
(87) International publication number: WO 2018/004951

(56) References cited:
- US-A1- 2003 135 609
- US-A1- 2012 124 319
- US-A1- 2013 297 907
- US-A1- 2014 075 111
- US-A1- 2014 095 691
- US-A1- 2014 258 537
- US-A1- 2014 325 095
- US-A1- 2015 058 846
- US-A1- 2015 236 926

## Description

### CROSS-REFERENCE TO RELATED APPLICATION

The present application claims priority to U.S. Utility Patent Application Serial No. 15/197,948, entitled "TECHNOLOGIES FOR PROVIDING DYNAMICALLY MANAGED QUALITY OF SERVICE IN A DISTRIBUTED STORAGE SYSTEM," which was filed on June 30, 2016.

### BACKGROUND

In a typical rack scale or pooled system environment (a "distributed storage system"), a request to compose a storage volume that has a certain quality of service (QOS) and is attached to a node of a specific processing capacity typically cannot be facilitated in a dynamic fashion. Rather, in a typical system, a storage cluster is setup beforehand and the QOS capabilities are fixed, based on the types of hardware included in the storage cluster (e.g., solid state drives, hard disk drives, etc.). Furthermore, in typical systems, the placement of data objects within the storage cluster is determined based on available storage capacity, rather than on the performance capabilities of the various data storage devices in the storage cluster. Accordingly, in typical systems, it is difficult or impossible to provide and maintain a specific QOS requested by a customer when providing storage and compute services.

US 2015/236926 A1 discusses client metrics of a volume in a storage system determined for the first client, the client metrics reflecting usage of the storage system by the first client. A client load value based is determined upon the client metrics. A quality of service management policy for the first client is determined from a plurality of quality of service management policies based upon the client load value. Each quality of service management policy comprises a formula based on a quality of service parameter. A client target performance value is determined based upon the formula of the quality of service management policy and the received client quality of service values. Performance of the storage system is adjusted for the first client based upon the client target performance value.

US 2012/124319 A1 discusses storage system based on monitored block level access within the storage system. Block level access, either in cache memory or on the storage devices of the storage system, is monitored to detect patterns of access and/or data that correspond to an identified host system program. Based on the identified host system program, a profile of desired storage device configuration information is selected by the storage system.

US 2014/095691 A1 discusses a cloud service provider to operate a data center in a way that dynamically reallocates resources across nodes within the data center based on both utilization and service level agreements, such that the allocation of resources may be adjusted dynamically based on current conditions. The current conditions in the data center may be a function of the nature of all the current workloads. US 2015/058846 discloses a host computer having a virtualization software that supports execution of a plurality of virtual machines, and where the virtualization software includes a virtual machine monitor for each of the virtual machines, each virtual machine monitor emulating a virtual central processing unit for a corresponding virtual machine.

### SUMMARY

The invention is defined in the claims. In the following description, any embodiment referred to and not falling within the scope of the claims is merely an example useful to the understanding of the invention.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a distributed storage system in communication with a client device through a network;
FIG. 2 is a simplified block diagram of at least one embodiment of a compute device included in the distributed storage system of FIG. 1;
FIG. 3 is a simplified block diagram of at least one embodiment of an environment that is established by a performance management server included in the distributed storage system of FIG. 1;
FIG. 4 is a simplified block diagram of at least one embodiment of an environment that may be established by a compute node or storage node included in the distributed storage system of FIG. 1;
FIGS. 5-7 are a simplified flow diagram of at least one embodiment of a method for provisioning resources that is performed by the performance management server in the system of FIG. 1;
FIG. 8 is a simplified flow diagram of at least one embodiment of a method for handling a read or write request in accordance with predefined quality of service parameters that is performed by the performance management server in the system of FIG. 1;
FIG. 9 is a simplified flow diagram of at least one embodiment of a method for maintaining a predefined quality of service that is performed by the performance management server in the system of FIG. 1; and
FIG. 10 is a simplified block diagram of at least one embodiment of an organization of object storage daemons that is used by the distributed storage system of FIG. 1.

### DETAILED DESCRIPTION OF THE DRAWINGS

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

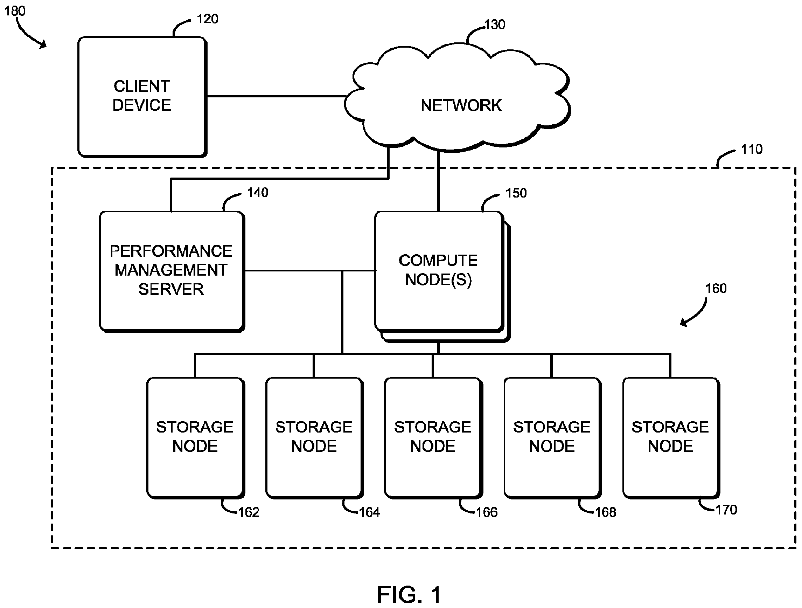

As shown in FIG. 1, an illustrative distributed storage system 110 for providing dynamically managed quality of service includes a performance management server 140 in communication with a set of compute nodes 150, which are in communication with a set of storage nodes 160. In the illustrative embodiment, the set of storage nodes 160 includes storage nodes 162, 164, 166, 168, 170. The system 110 may be located in a rack and provide storage and compute services (e.g., cloud services) to a client device 120 that is in communication with the system 110 through a network 130. Although shown separately in FIG. 1, in some embodiments, the performance management server 140 may be incorporated into one or more of the compute nodes 150. The performance management server 140 may support a cloud operating environment, such as OpenStack, and the compute nodes 150 may execute one or more applications on behalf of a user of the client device 120 and read and write data to and from the storage nodes 160. In the illustrative embodiment, the storage nodes 160 may execute object storage daemons (OSDs) or other processes to coordinate the distributed storage of data among them. Each of the client device 120, the performance management server 140, the compute nodes 150, and the storage nodes 160, may be embodied as compute devices 180. As discussed in more detail herein, the performance management server 140, in operation, is configured to provision storage and compute resources in response to a request from the client device 120 that indicates a desired quality of service, determine the performance capabilities of the compute nodes 150 and storage nodes 160, and dynamically manage the components of the system 110, by continually adjusting hardware and/or software parameters of the compute nodes 150 and storage nodes 160 to maintain the desired quality of service, and controlling the placement of data among the available storage devices of the storage nodes 160 to match the desired quality of service. This is in contrast to typical cloud systems in which the quality of service is dictated by the maximum throughput of the hardware components installed in the compute nodes and/or storage nodes and cannot be easily adjusted or controlled to suit a specified quality of service requested and paid for by a client, such as under a service level agreement (SLA).

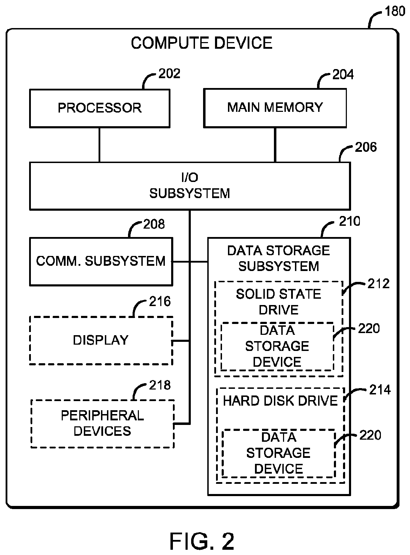

Referring now to FIG. 2, each compute device 180 may be embodied as any type of computing device capable of performing the functions described herein, including transmitting or receiving a request to provision resources (e.g., storage and compute capacity) in accordance with a set of quality of service parameters, provisioning the resources, and/or dynamically adjusting the operation of the components of the system 110 to maintain the quality of service. For example, the compute device 180 may be embodied as a server, a bare metal host, a server blade, a desktop computer, a notebook, a laptop computer, a netbook, an Ultrabook^{™}, and/or any other computing/communication device. As shown in FIG. 1, the illustrative compute device 180 includes a processor 202, a main memory 204, an input/output ("I/O") subsystem 206, a communication subsystem 208, and a data storage subsystem 210. Of course, the compute device 180 may include other or additional components, such as those commonly found in a typical computing device (e.g., various input/output devices and/or other components), in other embodiments. Additionally, in some embodiments, one or more of the illustrative components may be incorporated in, or otherwise form a portion of, another component. For example, the memory 204, or portions thereof, may be incorporated in the processor 202 in some embodiments.

The processor 202 may be embodied as any type of processor capable of performing the functions described herein. For example, the processor 202 may be embodied as a single or multi-core processor(s), digital signal processor, microcontroller, or other processor or processing/controlling circuit. Similarly, the memory 204 may be embodied as any type of volatile or non-volatile memory or data storage capable of performing the functions described herein. In operation, the memory 204 may store various data and software used during operation of the compute device 180 such as operating systems, applications, programs, libraries, and drivers. The memory 204 is communicatively coupled to the processor 202 via the I/O subsystem 206, which may be embodied as circuitry and/or components to facilitate input/output operations with the processor 202, the memory 204, and other components of the compute device 180. For example, the I/O subsystem 206 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 206 may form a portion of a system-on-a-chip (SoC) and be incorporated, along with the processor 202, the memory 204, and other components of the compute device 180, on a single integrated circuit chip.

The data storage subsystem 210, which may be embodied as any type of device or devices configured for short-term or long-term storage of data such as, for example, one or more solid state drives (SSDs) 212, one or more hard disk drives (HDDs) 214, memory devices and circuits, memory cards, or other data storage devices. The data storage subsystem 210 may store data and software used during operation of the compute device 180 such as user data, quality of service data, files, operating systems, applications, programs, libraries, and drivers, as described in more detail herein.

A data storage device 220, which may be embodied as any device capable of writing and reading data as described herein, may be incorporated in, or form a portion of, one or more other components of the compute device 180. For example, the data storage device 220 may be embodied as, or otherwise be included in, the solid state drive 212, the hard disk drive 214, or other components of the compute device 180, such as the main memory 204. The data storage device 220 may include a data storage controller and a memory, which may include non-volatile memory and volatile memory. The data storage controller may be embodied as any type of control device, circuitry, or collection of hardware devices capable of performing the functions described herein. In the illustrative embodiment, the data storage controller may include a processor or processing circuitry, local memory, a host interface, a buffer, and memory control logic (also referred to herein as a "memory controller"). The memory controller can be in the same die or integrated circuit as the processor or the memory or in a separate die or integrated circuit than those of the processor and the memory. In some cases, the processor, the memory controller, and the memory can be implemented in a single die or integrated circuit. Of course, the data storage controller may include additional devices, circuits, and/or components commonly found in a drive controller of a solid state drive in other embodiments.

The processor of the data storage device 220 may be embodied as any type of processor capable of performing the functions described herein. For example, the processor may be embodied as a single or multi-core processor(s), digital signal processor, microcontroller, or other processor or processing/controlling circuit. Similarly, the local memory of the data storage device 220 may be embodied as any type of volatile and/or non-volatile memory or data storage capable of performing the functions described herein. In the illustrative embodiment, the local memory stores firmware and/or other instructions executable by the processor to perform the described functions of the data storage controller. In some embodiments, the processor of the data storage device 220 and the local memory of the data storage device 220 may form a portion of a System-on-a-Chip (SoC) and be incorporated, along with other components of the data storage controller, onto a single integrated circuit chip.

The host interface of the data storage device 220 may also be embodied as any type of hardware processor, processing circuitry, input/output circuitry, and/or collection of components capable of facilitating communication of the data storage device 220 with a host device or service (e.g., a host application). That is, the host interface embodies or establishes an interface for accessing data stored on the data storage device 220. To do so, the host interface may be configured to utilize any suitable communication protocol and/or technology to facilitate communications with the data storage device 220 depending on the type of data storage device. For example, the host interface may be configured to communicate with a host device or service using Serial Advanced Technology Attachment (SATA), Peripheral Component Interconnect express (PCIe), Serial Attached SCSI (SAS), Universal Serial Bus (USB), and/or other communication protocol and/or technology in some embodiments.

The buffer of the data storage device 220 is embodied as volatile memory used by the data storage controller to temporarily store data that is being read from or written to the memory of the data storage device 220. The particular size of the buffer may be dependent on the total storage size of the memory of the data storage device 220. The memory control logic may be embodied as hardware circuitry and/or one or more devices configured to control the read/write access to data at particular storage locations of the memory of the data storage device 220.

The non-volatile memory of the data storage device 220 may be embodied as any type of data storage capable of storing data in a persistent manner (even if power is interrupted to non-volatile memory). For example, the non-volatile memory may be is embodied as one or more non-volatile memory devices. The non-volatile memory devices of the non-volatile memory may be embodied as three dimensional NAND ("3D NAND") non-volatile memory devices or as any combination of memory devices that use chalcogenide phase change material (e.g., chalcogenide glass), three-dimensional (3D) crosspoint memory, or other types of byte-addressable, write-in-place non-volatile memory, ferroelectric transistor random-access memory (FeTRAM), nanowire-based non-volatile memory, phase change memory (PCM), memory that incorporates memristor technology, Magnetoresistive random-access memory (MRAM) or Spin Transfer Torque (STT)-MRAM.

The volatile memory of the data storage device 220 may be embodied as any type of data storage capable of storing data while power is supplied to the volatile memory. For example, the volatile memory may be embodied as one or more volatile memory devices, and is periodically referred to hereinafter as volatile memory with the understanding that the volatile memory may be embodied as other types of non-persistent data storage in other embodiments. The volatile memory devices of the volatile memory may be embodied as dynamic random-access memory (DRAM) devices, or may be embodied as other types of volatile memory devices and/or memory technologies capable of storing data while power is supplied to volatile memory.

Still referring to FIG. 2, the illustrative compute device 180 additionally includes the communication subsystem 208. The communication subsystem 208 may be embodied as one or more devices and/or circuitry capable of enabling communications with one or more other compute devices, such as the client device 120 or one or more components of the system 110 (e.g., the performance management server 140, the compute nodes 150, and/or the storage nodes 160). The communication subsystem 208 may be configured to use any suitable communication protocol to communicate with other devices including, for example, wired communication protocols, wireless data communication protocols, and/or cellular communication protocols.

The compute device 180 may additionally include a display 216, which may be embodied as any type of display device on which information may be displayed to a user of the compute device 180. The display 216 may be embodied as, or otherwise use, any suitable display technology including, for example, a liquid crystal display (LCD), a light emitting diode (LED) display, a cathode ray tube (CRT) display, a plasma display, and/or other display usable in a compute device. The display 216 may include a touchscreen sensor that uses any suitable touchscreen input technology to detect the user's tactile selection of information displayed on the display including, but not limited to, resistive touchscreen sensors, capacitive touchscreen sensors, surface acoustic wave (SAW) touchscreen sensors, infrared touchscreen sensors, optical imaging touchscreen sensors, acoustic touchscreen sensors, and/or other type of touchscreen sensors.

In some embodiments, the compute device 180 may further include one or more peripheral devices 218. Such peripheral devices 218 may include any type of peripheral device commonly found in a compute device such as speakers, a mouse, a keyboard, and/or other input/output devices, interface devices, and/or other peripheral devices.

As described above, the system 110 and the client device 120 are illustratively in communication via the network 130, which may be embodied as any number of various wired or wireless networks. For example, the network 130 may be embodied as, or otherwise include, a publicly-accessible, global network such as the Internet, a wired or wireless wide area network (WAN), a wired or wireless local area network (LAN), and/or a cellular network. As such, the network 130 may include any number of additional devices, such as additional computers, routers, and switches, to facilitate communications among the compute devices 180.

Reference to memory devices can apply to different memory types, and in particular, any memory that has a bank group architecture. Memory devices generally refer to volatile memory technologies. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random access memory), or some variant such as synchronous DRAM (SDRAM). A memory subsystem as described herein may be compatible with a number of memory technologies, such as DDR4 (DDR version 4, initial specification published in September 2012 by JEDEC), DDR4E (in development by JEDEC), LPDDR4 (LOW POWER DOUBLE DATA RATE (LPDDR) version 4, JESD209-4, originally published by JEDEC in August 2014), WIO2 (Wide I/O 2 (WideIO2), JESD229-2, originally published by JEDEC in August 2014), HBM (HIGH BANDWIDTH MEMORY DRAM, JESD235, originally published by JEDEC in October 2013), DDR5 (DDR version 5, currently in discussion by JEDEC), LPDDR5 (currently in discussion by JEDEC), HBM2 (HBM version 2), currently in discussion by JEDEC), and/or others, and technologies based on derivatives or extensions of such specifications.

In addition to, or alternatively to, volatile memory, in one embodiment, reference to memory devices can refer to a nonvolatile memory device whose state is determinate even if power is interrupted to the device.

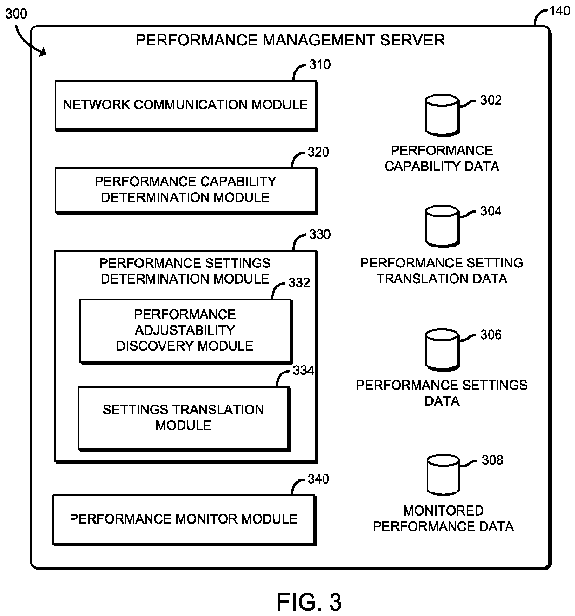

Referring now to FIG. 3, in use, the performance management server 140 establishes an environment 300. The illustrative environment 300 includes a network communication module 310, a performance capability determination module 320, a performance settings determination module 330, and a performance monitor module 340. Each of the modules and other components of the environment 300 may be embodied as firmware, software, hardware, or a combination thereof. For example the various modules, logic, and other components of the environment 300 may form a portion of, or otherwise be established by, the processor 202 or other hardware components of the performance management server 140. As such, in some embodiments, any one or more of the modules of the environment 300 may be embodied as a circuit or collection of electrical devices (e.g., a network communication circuit 310, a performance capability determination circuit 320, a performance settings determination circuit 330, a performance monitor circuit 340, etc.). In the illustrative embodiment, the environment 300 includes performance capability data 302, performance setting translation data 304, performance settings data 306, and monitored performance data 308.

The performance capability data 302 may be embodied as information pertaining to the performance capabilities (e.g., throughput, operations per second, bytes per second, etc.) of the data storage subsystem 210, the processor 202, the memory 204, the I/O subsystem 206, and/or the communication subsystem 208 of the storage nodes 160 and, in some embodiments, the compute nodes 150 as well. The performance setting translation data 304 may be embodied as information for converting between a desired quality of service (e.g., QOS of a compute node 150, QOS of a storage node 160, QOS of a volume embodied as a combination of one or more compute nodes 150 and one or more storage nodes 160, etc.) and hardware performance metrics, such as input/output operations per second, storage transfer times, and other types of performance metrics represented in the performance capability data 302. As such, the performance setting translation data 304 may define a mapping function to convert between a desired quality of service and target hardware performance capabilities of the storage node(s) 160 and compute node(s) 150 to achieve a given quality of service. The performance settings data 306 may be embodied as information defining the available performance settings for the hardware components of the storage node(s) 160 and compute node(s) 150 and their present values. The monitored performance data 308 may embodied as the input/output operations per second, storage transfer times, and other metrics associated with the present performance of the compute node(s) 150 and storage nodes(s) 160 (i.e., a volume) assigned to provide services to the client device 120. The performance capability data 302, performance setting translation data 304, performance settings data 306, and monitored performance data 308 may be accessed by the various modules and/or sub-modules of the performance management server 140.

In the illustrative embodiment, the network communication module 310, which may be embodied as hardware, firmware, software, virtualized hardware, emulated architecture, and/or a combination thereof as discussed above, is configured to transmit data to one or more of the compute devices 180 and receive data from one or more of the compute devices 180. As such, the network communication module 310 is configured to receive, from the client device 120, an indication of a desired quality of service as a parameter of a request to compose a volume (i.e., one or more compute nodes 150 and storage nodes 160) for cloud-based services. Similarly, the network communication module 310 is configured to transmit a request to the compute node(s) 150 and storage nodes(s) 160 for performance capability data 302, performance settings data 306, and monitored performance data 308, receive the requested data, and transmit requests to the compute nodes(s) 150 and storage nodes(s) 160 to adjust (e.g., increase or decrease) one or more settings to maintain the quality of service requested by the client device 120.

In the illustrative embodiment, the performance capability determination module 320, which may be embodied as hardware, firmware, software, virtualized hardware, emulated architecture, and/or a combination thereof as discussed above, is configured to determine capabilities of the compute devices 180 of the system 110. In doing so, the performance capability determination module 320 is configured to cause the network communication module 310 to transmit a request to the compute node(s) 150 and/or the storage nodes(s) 160 to perform a self-evaluation and report back a set of performance metrics (i.e., the performance capability data 302). In the illustrative embodiment, the performance capability determination module 320 is configured to determine processor capabilities, network port capabilities, and storage capacity capabilities of the compute node(s) 150 and the storage node(s) 160.

In the illustrative embodiment, the performance settings determination module 330, which may be embodied as hardware, firmware, software, virtualized hardware, emulated architecture, and/or a combination thereof as discussed above, is configured to determine target performance metrics associated with the target quality of service requested by the client device 120, determine target configuration settings for the compute devices 180 of the system 110 to provide the target quality of service, and configure the compute devices 180 with the target configuration settings. To do so, in the illustrative embodiment, the performance settings determination module 330 includes a performance adjustability discovery module 332 and a settings translation module 334. The performance adjustability discovery module 332 is configured to discover the hardware, firmware, and/or software settings (i.e., the performance settings data 306) that may be adjusted to selectively increase or decrease the processor, network port, and/or storage performance of the compute node(s) 150 and storage node(s) 160. The performance adjustability discovery module 332 is configured to cause the network communication module 310 to transmit a request to these compute devices 180 to report back their available settings (e.g., high, medium, low and their corresponding objective values, such as I/O operations per second, etc.). The settings translation module 334 is configured to convert a target quality of service to target settings of the components of the compute node(s) 150 and/or storage node(s) 160 using the performance setting translation data 304. As described above, the performance setting translation data 304 defines a mapping function for converting between a target quality of service and the corresponding performance values (e.g., input/output operations per second, storage transfer times, etc.). In other embodiments, the performance setting translation data 304 may be embodied as a set of target performance metrics that are indexed by target qualities of service. As described in more detail herein, the performance settings determination module 330 may be additionally configured to adjust a mapping (e.g., a data placement algorithm) of where data is stored within the storage nodes 160, based on the performance capabilities of the data storage subsystems 210 of the various storage nodes 160. For example, some data storage subsystems 210 may include solid state drives 212 while other data storage subsystems 210 of other storage nodes 160 may be primarily composed of hard disk drives 214. The solid state drives 212 typically provide faster data storage and retrieval than the hard disk drives 214. Accordingly, for a target quality of service that is relatively greater than another target quality of service, the adjusted mapping tends to write and read data from the storage nodes 160 having data storage subsystems based primarily on solid state drives 212.

It should be appreciated that each of the performance adjustability discovery module 332 and the settings translation module 334 may be separately embodied as hardware, firmware, software, virtualized hardware, emulated architecture, and/or a combination thereof. For example, the performance adjustability discovery module 332 may be embodied as a hardware component, while the settings translation module 334 is embodied as a virtualized hardware component or as some other combination of hardware, firmware, software, virtualized hardware, emulated architecture, and/or a combination thereof.

In the illustrative embodiment, the performance monitor module 340, which may be embodied as hardware, firmware, software, virtualized hardware, emulated architecture, and/or a combination thereof as discussed above, is configured to determine a present performance of the system 110 and additionally determine whether the present performance of the system 110 satisfies the target quality of service. In the illustrative embodiment, the performance monitor module 340 periodically queries the compute devices 180 (e.g., the compute nodes 150 and/or the storage nodes 160) of the system 110 to report back their performance data, which the performance monitor module 340 may then store as the monitored performance data 308 described above. The performance monitor module 340 is configured to then convert the monitored performance data 308 back to a resulting quality of service level, such as by using the performance setting translation data 304 described above. If the resulting quality of service associated with the monitored performance data 308 does not satisfy the target quality of service, the performance monitor module 340 requests the performance settings determination module 330 to readjust (e.g., selectively increase or decrease) the performance settings of the components of the compute devices 180 of the system 110 to match the target quality of service.

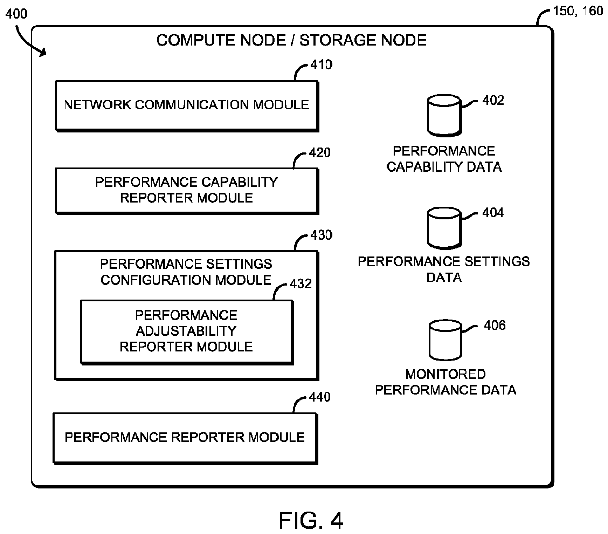

Referring now to FIG. 4, in use, each of the compute nodes 150 and storage nodes 160 may establish an environment 400. The illustrative environment 400 includes a network communication module 410, a performance capability reporter module 420, a performance settings configuration module 430, and a performance reporter module 440. Each of the modules and other components of the environment 400 may be embodied as firmware, software, hardware, or a combination thereof. For example the various modules, logic, and other components of the environment 400 may form a portion of, or otherwise be established by, each compute node 150 or storage node 160 or other hardware components of each compute node 150 or storage node 160. As such, in some embodiments, any one or more of the modules of the environment 400 may be embodied as a circuit or collection of electrical devices (e.g., a network communication circuit 410, a performance capability reporter circuit 420, a performance settings configuration circuit 430, a performance reporter circuit 440, etc.). In the illustrative embodiment, the environment 400 includes performance capability data 402, performance settings data 404, and monitored performance data 406. The performance capability data 402 is similar to the performance capability data 302, except the performance capability data 402 pertains only to the present compute node 150 or storage node 160, rather than to all of the compute nodes 150 and storage nodes 160 of the system 110. Likewise, the performance settings data 404 is similar to the performance settings data 306 stored by the performance management server 140, except the performance settings data 404 pertains only to the present compute node 150 or storage node 160. Further, the monitored performance data 406 is similar to the monitored performance data 308 stored by the performance management server 140, except the monitored performance data 406 pertains only to the present compute node 150 or storage node 160, rather than to all of the compute nodes 150 or storage nodes 160 of the system 110.

The illustrative network communication module 410, which may be embodied as hardware, firmware, software, virtualized hardware, emulated architecture, and/or a combination thereof as discussed above, is configured to transmit and receive data to and from one or more of the compute devices 180, such as the performance management server 140, the client device 120, and/or one or more other compute devices 180 of the system 110. As such, the network communication module 410 receives requests from the performance management server 140 to report back the performance capabilities of the compute device 180, to report back the available performance settings that may be adjusted, to report back the present values of those settings, to set one or more performance settings, and/or to report back the present performance of the compute device 180. Similarly, the network communication module 410 is configured to receive a request from the client device 120 to perform computation and/or data storage or retrieval operations and to transmit the results of those operations to the client device 120.

The illustrative performance capability reporter module 420, which may be embodied as hardware, firmware, software, virtualized hardware, emulated architecture, and/or a combination thereof as discussed above, is configured to perform a self-evaluation of the compute node 150 or storage node 160, such as in response to a request from the performance management server 140, and to provide the results of the self-evaluation to the performance management server 140, such as through the network communication module 410.

The illustrative performance settings configuration module 430, which may be embodied as hardware, firmware, software, virtualized hardware, emulated architecture, and/or a combination thereof as discussed above, is configured to detect the available settings in the hardware, firmware, and/or software of the compute node 150 or storage node 160 that may affect the performance of the compute node 150 or storage node 160. Further, the performance settings configuration module 430 is configured to set or adjust the performance settings in response to a request from the performance management server 140 to do so. The performance settings configuration module 430 includes a performance adjustability reporter module 432 to facilitate detection of the available performance settings. The performance adjustability reporter module 432 is configured to query each hardware, firmware, and software component for available performance settings. The performance settings may include storage device throughput and data access latency, operating system call latency, bus latency, network port input/output speeds, and/or other settings. These settings may be embodied as flags in the drivers of the various hardware components, settings in the controllers of the components, and/or settings in the operating system or in a virtual machine manager (VMM). The performance settings configuration module 430 is further configured to provide these detected settings (i.e., the performance settings data 404) to the performance management server 140 in response to the request, such as through the network communication module 410.

The illustrative performance reporter module 440, which may be embodied as hardware, firmware, software, virtualized hardware, emulated architecture, and/or a combination thereof as discussed above, is configured to determine the present performance (i.e., the monitored performance data 406) of the present compute node 150 or storage node 160 and report the performance data to the performance management server 140 on a periodic basis and/or in response to a request to do so.

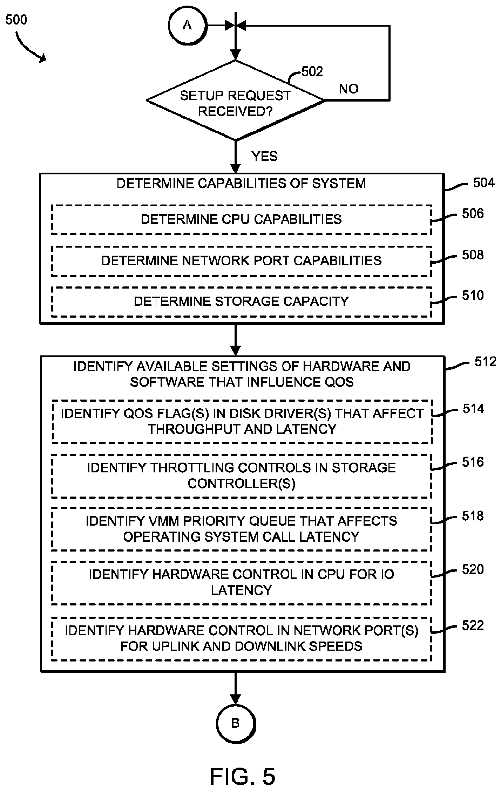

Referring now to FIG. 5, in use, the performance management server 140 executes a method 500 for provisioning resources (i.e., composing a volume) for providing services to the client device 120. The method 500 begins with block 502 in which the performance management server 140 determines whether a setup request has been received. The performance management server 140 receives a setup request from the client device 120 as a request to compose a volume (i.e., a combination of one or more compute nodes 150 and storage nodes 160) to provide services (i.e., execution of an application or other processes). In response to a determination that a setup request has been received, the method 500 advances to block 504, in which the performance management server 140 determines capabilities of the system 110. In doing so, in the illustrative embodiment, the performance management server 140 may determine CPU (e.g., the processor 202) capabilities, such as the number of input/output operations per second that the CPU is capable of performing, for each compute device 180 in the system 110, as indicated in block 506. Similarly, the performance management server 140 may determine the number of input/output operations per second that the main memory 204 is capable of performing for each compute device 180 in the system 110. Additionally, the performance management server 140 may determine the number of input/output operations per second (IOPS) that the data storage subsystem 210 is capable of performing, the performance (IOPS) of each storage controller in a data storage subsystem 210, storage transfer times (e.g., in MB/s), average disk I/O (e.g., in milliseconds), maximum input/output operations per second (IOPS) per disk (i.e., 1/average disk I/O), and the total number of I/O units available (i.e., maximum IOPS of CPU * maximum IOPS per Ethernet link / 20). Additionally or alternatively, as indicated in block 508, the performance management server 140 may determine the network port capabilities of each compute device 180 of the system 110. In doing so, the performance management server 140 may determine a maximum number of input/output operations per second (IOPS) per Ethernet link (i.e., number of input/output operations per second transmitted to the network of storage nodes 160 / number of Ethernet links in the network of storage nodes 160), and/or other measurements of the network performance, including the latency (e.g., in milliseconds) of the network link between a storage node 160 and the data recipient or transmitter.

Additionally or alternatively, the performance management server 140 may determine a storage capacity of each compute device 180 in the system 110, as indicated in block 510. In determining these performance capabilities, the performance management server 140 may transmit corresponding requests for this information to the various compute devices 180 (e.g., compute nodes 150 and storage nodes 160) of the system 110 and receive and store the responses in the performance capability data 302, described above. In block 512, the performance management server 140 identifies available settings of hardware and software of the compute devices 180 of the system 110 that influence quality of service (QOS). In doing so, as indicated in block 514, the performance management server 140 may identify one or more QOS flags that may be set or adjusted in the hardware, firmware, or software of the compute devices 180 that affect throughput and latency. As indicated in block 516, the performance management server 140 may identify throttling controls in the controllers of the storage devices of the data storage subsystems 210 of the compute devices 180. Additionally or alternatively, as indicated in block 518, the performance management server 140 may identify a virtual machine manager (VMM) priority queue (e.g., priorities to be assigned to various virtual machines) that affects operating system call latency for each of the virtual machines. As indicated in block 520, the performance management server 140 may identify a hardware control in the CPU (e.g., the processor 202) for I/O latency. Additionally or alternatively, as indicated in block 522, the performance management server 140 may identify a hardware control in the network port(s) (i.e., the communication subsystems 208) of the compute devices 180 for controlling uplink and downlink speeds. In identifying these available settings, the performance management server 140 may transmit a request to the compute devices 180 (e.g., the compute nodes 150 and storage nodes 160) to report this information and store the resulting information as the performance settings data 306, described above.

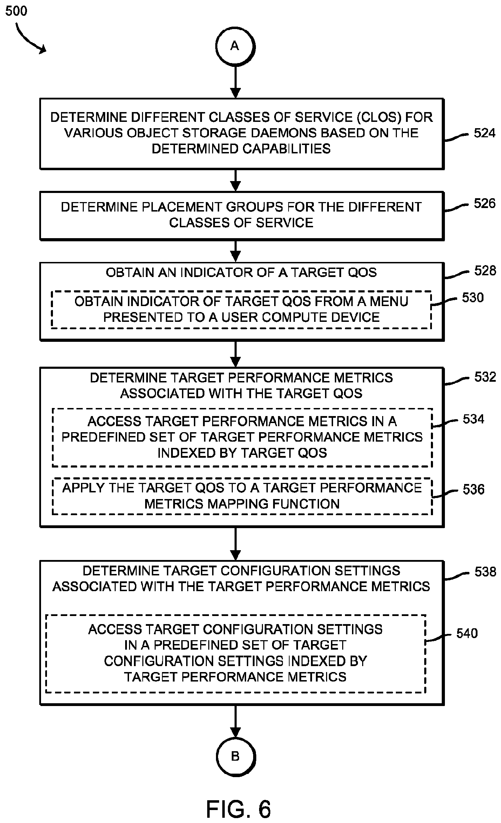

Referring now to FIG. 6, after identifying the available settings that the influence the QOS in block 512, the method 500 advances to block 524 in which the performance management server 140 determines different classes of service (CLOS) for various object storage daemons based on the determined performance capabilities of the compute devices 180 of the system 110. For example, some storage nodes 160 may primarily include SSDs 212, which typically provide better QOS (i.e., faster read and write speeds, more input/output operations per second, etc.) than other storage nodes 160 that may primarily include HDD's 214, which tend to provide lower QOS (i.e., slower read and write speeds, fewer input/output operations per second, etc.). Further, as indicated in block 526, the illustrative performance management server 140 determines placement groups for the different classes of service (i.e., QOS levels) determined in block 524. In the illustrative embodiment, data is stored as objects and the objects are assigned to placement groups. Each placement group is associated with a set of object storage daemons executed by the storage nodes 160. Accordingly, the performance management server 140 associates a set of object storage daemons (i.e., storage nodes 160) that reported greater performance capabilities to a class of service associated with a relatively higher QOS, and, conversely, may associate a different set of object storage daemons (i.e., other storage nodes 160) that reported lower performance capabilities to a class of service associated with a relatively lower QOS.

In block 528, the performance management server 140 obtains an indicator of the target QOS requested by the client device 120. In doing so, the performance management server 140 may obtain an indicator of the target QOS from a menu presented to a user compute device (i.e., the client device 120), as indicated in block 530. In the illustrative embodiment, the performance management server 140 may present a menu through a web page usable by an operator of the client device 120 to select a particular QOS (e.g., high, medium, or low), which may be listed with a particular monthly fee or other indication of price, and receive the operator's selection of one of the listed qualities of service in response.

In block 532, the performance management server 140 determines target performance metrics associated with the target QOS. In doing so, the performance management server 140 may access target performance metrics in a predefined set of target performance metrics indexed by corresponding target qualities of service, as indicated in block 534. Additionally or alternatively, the performance management server 140 may apply the target QOS to a target performance metrics mapping function that outputs target input/output operations per second, target data read times, target data write times, and/or other performance measures. As described above, the target performance metrics and/or mapping function may be defined in the performance setting translation data 304. As an example, the performance setting translation data 304 may include a mapping function that defines a total IOPS (input/output instruction per second) measure as megabytes per second throughput divided by kilobytes per IO operation, multiplied by 1024. The performance setting translation data 304 may also define a megabyte per second measure as IOPS multiplied by a number of kilobytes per IO operation, divided by 1024. Further, the performance setting translation data 304 may define the QOS of a volume as being greater than or equal to the minimum of the QOS of a compute node 150 and the QOS of a storage node 160 included in the volume. Further, the performance setting translation data 304 may define the QOS of a compute node 150 as the minimum of the QOS of a virtual machine (VM) executed at the compute node 150, the QOS of the communication subsystem 208 of the compute node 150, and the QOS of a switch uplink port associated with the compute node 150. Further, the performance setting translation data 304 may define the QOS of a storage node 160 as the minimum of the QOS of a switch downlink port associated with the storage node 160, the QOS of the object storage daemon executed by the storage node 160, the file system read and write QOS, and the QOS of one or more storage device drivers of the storage node 160. In block 538, the performance management server 140 determines target hardware, firmware, and software configuration settings associated with the target performance metrics. In doing so, the performance management server 140 may access target configuration settings in a predefined set of target configuration settings indexed by target performance metrics. As described above, target configuration settings may be stored in association with corresponding target performance metrics in the performance setting translation data 304.

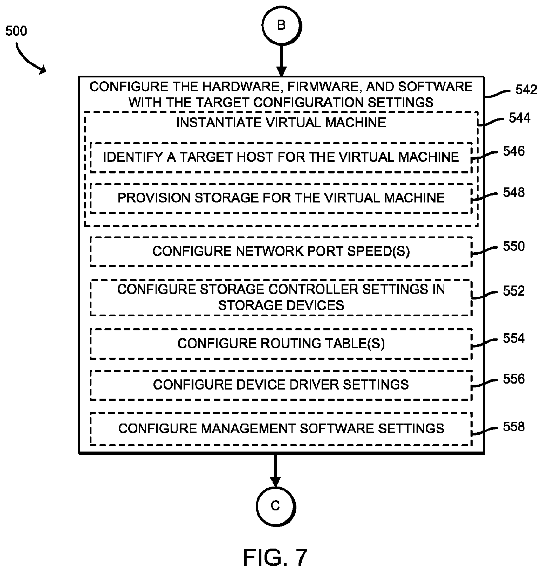

Referring now to FIG. 7, after determining the target hardware, firmware, and software configuration settings in block 538, the method 500 advances to block 542, in which the performance management server 140 configures the hardware, firmware, and software of the compute devices 180 of the system 110 with the target configuration settings. In doing so, the performance management server 140 may instantiate a virtual machine on a compute node 150, as indicated in block 544. As part of this operation, the performance management server 140 may identify a target host (i.e., a compute node 150 that reported performance capabilities that satisfy the target QOS), as indicated in block 546. As indicated in block 548, the performance management server 140 may provision storage for the virtual machine, such as by providing a request to one or more of the storage nodes 160 to allocate storage in their respective storage subsystems 210 for the virtual machine. In block 550, the performance management server 140 may configure network port speeds of the compute nodes 150 and/or storage nodes 160 to match the target QOS. In the illustrative embodiment, the performance management server 140 additionally configures storage controller settings for the storage controllers of the storage devices in the storage subsystems 210 of the storage nodes 160, as indicated in block 552. Further, in the illustrative embodiment, as indicated in block 554, the performance management server 140 configures one or more routing tables, such as a CRUSH (Controlled Replication Under Scalable Hashing) map used by the storage nodes 160 to route data objects used by the one or more compute nodes 150 provisioned for the client device 120 to placement groups, which in turn, are associated with specific data storage devices 220 of the storage nodes 160. As indicated in block 556, the performance management server 140 may configure device driver settings, such as settings of device drivers for the processors, communication subsystem, data storage devices, and/or other components of the compute nodes 150 and/or storage nodes 160 to match the target QOS. Further, as indicated in block 558, the performance management server 140 may configure management software settings, such as operating system settings, to give a particular priority level to processes or applications executed on behalf of the client device 120 to achieve the target QOS. In configuring the settings described above, the performance management server 140 may transmit requests to the respective compute devices 180 of the system 110 to establish the settings of the various components. After configuring the hardware and software with the target configuration settings, the method 500 loops back to block 502 of FIG. 5 to await another setup request.

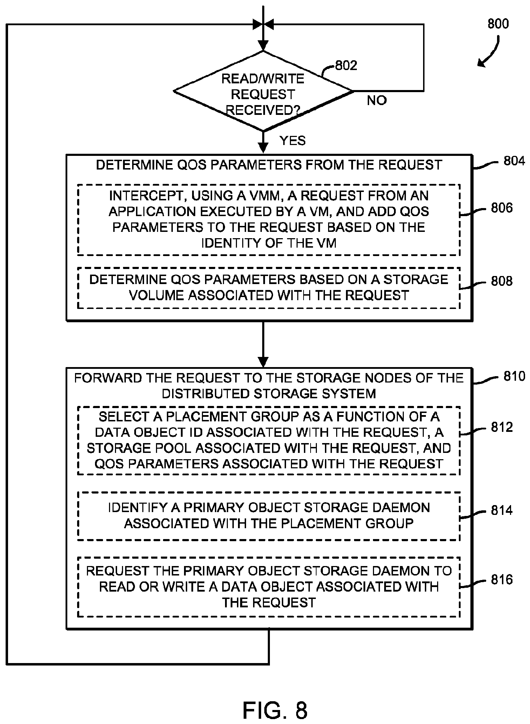

Referring now to FIG. 8, in use, the performance management server 140 performs a method 800 of handling a read or write request in accordance with the target QOS. The method 800 begins with block 802 in which the performance management server 140 determines whether a read or write request has been received. The request may be generated by an application executing on a compute node 150 that has been assigned to a volume for the client device 120. In other embodiments, the request may be generated by and received from the client device 120 directly. In yet other embodiments, the request may originate from another source. Regardless, in block 804, the performance management server 140 determines the target QOS parameters from the request. In the illustrative embodiment, as indicated in block 806, the performance management server 140 may intercept the request, using a VMM of a compute node 150 executing the application or process that generated the request, and add the QOS parameters to the request based on the identity of the VM. As described with reference to method 500, a particular VM may be provisioned to execute an application or one or more processes on behalf of the client device 120, which requested a particular QOS. As indicated in block 808, the performance management server 140 may determine the applicable QOS parameters based on the storage volume (i.e., set of storage nodes 160) associated with the request (i.e., the storage nodes 160 configured to provide data storage and retrieval services for the client device 120).

In block 810, the performance management server 140 forwards the request to the storage nodes 160 of the distributed storage system 110. In the illustrative embodiment, the performance management server 110 forwards the request to the set of storage nodes 160 configured to provide data storage and retrieval services for the client device 120. In doing so, the performance management server 140 may select a placement group as a function of a data object ID associated with the request, a storage pool associated with the request, and QOS parameters associated with the request. This may be performed as a result of the configuration of a CRUSH map (i.e., block 554) to enable the CRUSH map to use the target QOS as an additional parameter in determining which placement groups are to store particular data objects. In block 814, the performance management server 140 may identify a primary object storage daemon associated with the placement group selected in block 812. Further, in block 816, the performance management server 140 may request the primary object storage daemon to read or write a data object associated with the request. After forwarding the request to the applicable storage nodes 160 of the distributed storage system 110, the method 800 loops back to block 802 in which the performance management server 140 awaits another read or write request. Further, although the method 800 is describes as being performed by the performance management server 140, it should be understood that in some embodiments, which are not part of the claimed invention, the various compute devices 180 of the system 110 may perform operations of the described blocks pursuant to requests or configuration settings from the performance management server 140, rather than the performance management server 140 performing the operations directly.

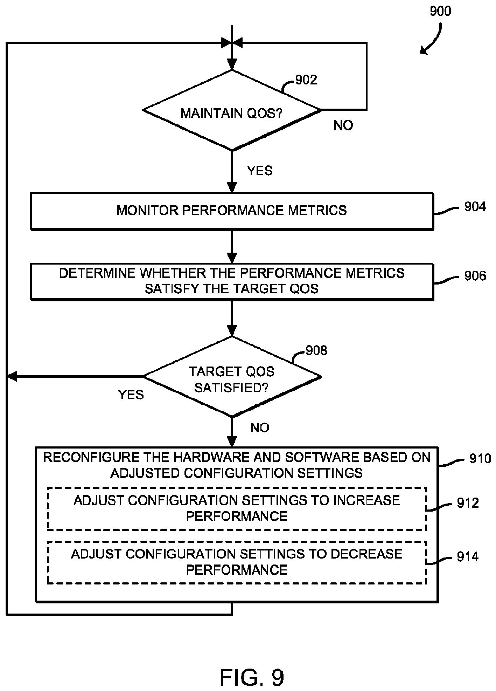

Referring now to FIG. 9, in use, the performance management server 140 performs a method 900 for maintaining a target QOS for an application during operation of the system 110. The method 900 begins with block 902, in which the performance management server 140 determines whether to maintain a target QOS. In the illustrative embodiment, the performance management server 140 is configured to maintain the target QOS unless it receives a specific request to stop doing so, such as in response to the client device 120 selecting a different target QOS. In other embodiments, the performance management server 140 may determine whether to maintain the target QOS based on other criteria. Regardless, in response to a determination to maintain the target QOS, the method 900 advances to block 904 in which the performance management server 140 monitors the present performance metrics, such as by requesting the various compute devices 180 assigned to provide services for the client device 120 to report their performance data at periodic intervals and receiving the reported performance data. In block 906, the performance management server 140 determines whether the performance metrics satisfy the target QOS. The performance management server 140 may make this determination by accessing the performance setting translation data 304 and determining whether the performance data for the target QOS match the monitored performance data 308. In block 908, the performance management server 140 performs an action based on whether the target QOS is satisfied by the monitored performance data 308. If so, the method 900 loops back to block 902 in which the performance management server 140 again determines whether to maintain the target QOS. Otherwise, the method 900 advances to block 910 in which the performance management server 140 reconfigures the hardware and/or software of the compute devices 180 (e.g., the compute nodes 150 and/or storage nodes 160 assigned to provide services for the client device 120) based on adjusted configuration settings. In doing so, the performance management server 140 may adjust the configuration settings to increase performance, as indicated in block 912 or may adjust the configuration settings to decrease performance, as indicated in block 914. In other words, the performance management server 140 sets the hardware and software components to operate at the target QOS, without exceeding the target QOS. By not exceeding the target QOS, the performance management server 140 may reserve storage and processing capacity for other client devices 120 that may be concurrently using the system 110.

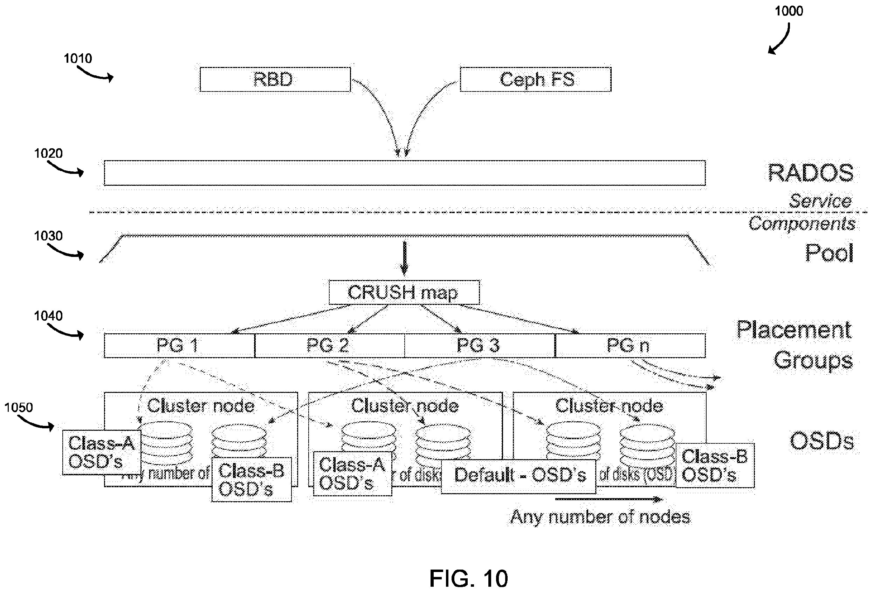

Referring now to FIG. 10, an illustrative organization 1000 of object storage daemons (i.e., processes for routing the storage of data objects) executed by the storage nodes 160 of the system 110 is shown. At a layer 1010, a RADOS (Reliable Autonomic Distribute Object Store) block device (RBD) and a Ceph file system (CephFS) provide data to a RADOS layer 1020. Layers 1010 and 1020 represent a services section of the organization 1000. Within a components section of the organization 1000, a layer 1030 includes a CRUSH map used to route data objects to various placement groups in a lower layer 1040. In yet a lower layer 1050, cluster nodes (i.e., storage nodes 160) executing object storage daemons include classes of data storage devices 220, which may have differing performance capabilities. For example, as described above, SSDs which may be associated with "Class A" object storage daemons may provide faster read and write operations and otherwise better performance than HDDs which may be associated with "Class B" object storage daemons. As described above, the CRUSH map may be configured to factor in the target QOS in its determination of which placement group a particular data object is to be stored in. This is an enhancement over a typical CRUSH map in which the selection of the placement group is based on a storage pool ID and an object ID, without regard to a target QOS. More specifically, in an illustrative embodiment, the CRUSH map may be modified such that, in addition to the storage pool ID and object ID being passed to the CRUSH map, the QOS parameters are also passed. In the illustrative embodiment, the modified CRUSH map utilizes the QOS parameters by filtering out object storage daemons that offer a QOS below the target QOS, so that the remaining set of object storage daemons available to the placement group selection process support at least the target QOS. The placement group selection process then proceeds as normal, to select a placement group from the available set of placement groups.

## Claims

1. A distributed storage system (110) comprising:
a performance management server (140) in communication with one or more compute devices (180), the performance management server (140) comprising:
a memory (204);
a processor (202) coupled to the memory;
a performance capability determination module (320) configured to determine capabilities of the one or more compute devices (180) of the distributed storage system (110);
a network communication module (310) configured to obtain an indicator of a target quality of service to be provided by the distributed storage system (110);
a performance settings determination module (330) configured to (i) determine target performance metrics associated with the target quality of service, (ii) determine target configuration settings for the one or more compute devices (180) of the distributed storage system to provide the target quality of service, and (iii) configure the one or more compute devices (180) with the target configuration settings; and
a performance monitor module (340) configured to (i) determine whether a present performance of the distributed storage system satisfies the target quality of service, and (ii) reconfigure the one or more compute devices (180), by adjusting configuration settings of the one or more compute devices, in response to a determination that the target quality of service is not satisfied,
**characterised in that** the performance management server (140), while configuring the one or more compute devices with the target configuration settings, is further configured to (i) determine different classes of service for different object storage daemons of the distributed storage system (110), based on the determined capabilities, (ii) determine placement groups of the different classes of service, wherein each placement group is associated with one of the object storage daemons, and (iii) configure one or more routing tables to route data objects to a placement group, based on the target quality of service.

2. The distributed storage system of claim 1, wherein to determine capabilities of one or more compute devices of the distributed storage system comprises to determine at least one of processor capabilities, network port capabilities, or storage capacity capabilities.

3. The distributed storage system of claim 1, wherein the performance settings determination module is further to identify available settings associated with quality of service of hardware and software of each compute device.

4. The distributed storage system of claim 3, wherein to identify the available settings comprises to identify at least one of a quality of service flag in a disk driver that affects throughput and latency, a throttling control in a storage controller, a virtual machine manager priority queue that affects operating system call latency, a hardware control in a processor to control input and output latency, or a hardware control in a network port for control of uplink and downlink speeds.

5. The distributed storage system of claim 1, wherein to obtain an indicator of a target quality of service comprises to obtain the indicator from a menu presented to a user compute device.

6. The distributed storage system of claim 1, wherein to determine target performance metrics associated with the target quality of service comprises to access the target performance metrics in a predefined set of target performance metrics that are indexed by target qualities of service.

7. A method, at a distributed storage system (110) (500) comprising: a performance management server (140) in communication with one or more compute devices (180), the method comprising:
determining (504), by a processor (202) of the performance management server, capabilities of one or more compute devices of a distributed storage system;
obtaining (528), by the processor, an indicator of a target quality of service to be provided by the distributed storage system;
determining (532), by the processor, target performance metrics associated with the target quality of service;
determining (538), by the processor, target configuration settings for the one or more compute devices of the distributed storage system to provide the target quality of service;
configuring (542), by the processor, the one or more compute devices with the target configuration settings;
determining, by the processor, whether a present performance of the distributed storage system satisfies the target quality of service; and
reconfiguring, by the processor, the one or more compute devices by adjusting configuration settings of the one or more compute devices, in response to a determination that the target quality of service is not satisfied,
**characterised in that** the configuring further comprises:
determining, by the processor, different classes of service for different object storage daemons of the distributed storage system, based on the determined capabilities;
determining, by the processor, placement groups of the different classes of service, wherein each placement group is associated with one of the object storage daemons; and
configuring (554) one or more routing tables to route data objects to a placement group based on the target quality of service.

8. The method of claim 7, wherein determining capabilities of one or more compute devices of the distributed storage system comprises determining at least one of processor capabilities, network port capabilities, or storage capacity capabilities.

9. The method of claim 7, further comprising identifying, by the processor, available settings associated with quality of service of hardware and software of each compute device.

10. The method of claim 9, wherein identifying the available settings comprises identifying at least one of a quality of service flag in a disk driver that affects throughput and latency, a throttling control in a storage controller, a virtual machine manager priority queue that affects operating system call latency, a hardware control in a processor to control input and output latency, or a hardware control in a network port for control of uplink and downlink speeds.

11. The method of claim 7, wherein obtaining an indicator of a target quality of service comprises obtaining the indicator from a menu presented to a user compute device.

12. The method of claim 7, wherein determining target performance metrics associated with the target quality of service comprises accessing, by the processor, the target performance metrics in a predefined set of target performance metrics that are indexed by target qualities of service.

13. One or more machine-readable storage media comprising a plurality of instructions stored thereon that, which when executed by a processor (202) of a performance management server (140) in a distributed storage system (110), cause the performance management server (140) to perform the method of any of claims 7-12.

## Patentansprüche

1. Verteiltes Speichersystem (110), umfassend:
einen Leistungsverwaltungsserver (140) in Kommunikation mit einer oder mehreren Rechenvorrichtungen (180), wobei der Leistungsverwaltungsserver (140) umfasst:
einen Speicher (204);
einen mit dem Speicher gekoppelten Prozessor (202);
ein Leistungsfähigkeitsbestimmungsmodul (320), das dazu konfiguriert ist, die Fähigkeiten der einen oder mehreren Rechenvorrichtungen (180) des verteilten Speichersystems (110) zu bestimmen;
ein Netzwerkkommunikationsmodul (310), das dazu konfiguriert ist, einen Indikator für eine von dem verteilten Speichersystem (110) bereitzustellende angestrebte Dienstgüte zu erhalten;
ein Leistungseinstellungsbestimmungsmodul (330), das dazu konfiguriert ist, (i) angestrebte Leistungsmetriken zu bestimmen, die der angestrebten Dienstgüte zugeordnet sind, (ii) angestrebte Konfigurationseinstellungen für die eine oder mehrere Rechenvorrichtungen (180) des verteilten Speichersystems zu bestimmen, um die angestrebte Dienstgüte bereitzustellen, und (iii) die eine oder mehrere Rechenvorrichtungen (180) mit den angestrebten Konfigurationseinstellungen zu konfigurieren; und
ein Leistungsüberwachungsmodul (340), das dazu konfiguriert ist, (i) zu bestimmen, ob eine gegenwärtige Leistung des verteilten Speichersystems die angestrebte Dienstgüte erfüllt, und (ii) die eine oder mehreren Rechenvorrichtungen (180) durch Anpassen von Konfigurationseinstellungen der einen oder mehreren Rechenvorrichtungen als Reaktion auf eine Bestimmung, dass die angestrebte Dienstgüte nicht erfüllt ist, zu rekonfigurieren,
**dadurch gekennzeichnet, dass** der Leistungsverwaltungsserver (140), während er die eine oder mehrere Rechenvorrichtungen mit den angestrebten Konfigurationseinstellungen konfiguriert, ferner dazu konfiguriert ist, (i) verschiedene Dienstklassen für verschiedene Objektspeicherdämonen des verteilten Speichersystems (110) basierend auf den bestimmten Fähigkeiten zu bestimmen, (ii) Platzierungsgruppen der verschiedenen Dienstklassen zu bestimmen, wobei jede Platzierungsgruppe einem der Objektspeicherdämonen zugeordnet ist, und (iii) eine oder mehrere Routing-Tabellen zu konfigurieren, um Datenobjekte zu einer Platzierungsgruppe zu routen, basierend auf der angestrebte Dienstgüte.

2. Verteiltes Speichersystem nach Anspruch 1, wobei, um die Fähigkeiten einer oder mehrerer Rechenvorrichtungen des verteilten Speichersystems zu bestimmen, das Bestimmen von Prozessorfähigkeiten und/oder Netzwerkportfähigkeiten und/oder Speicherkapazitätsfähigkeiten umfasst.

3. Verteiltes Speichersystem nach Anspruch 1, wobei das Leistungseinstellungsbestimmungsmodul ferner dazu dient, verfügbare Einstellungen zu identifizieren, die der Dienstgüte von Hardware und Software jeder Rechenvorrichtung zugeordnet sind.

4. Verteiltes Speichersystem nach Anspruch 3, wobei, um die verfügbaren Einstellungen zu identifizieren, das Identifizieren eines Dienstgüte-Flags in einem Festplattentreiber, das den Durchsatz und die Latenz beeinflusst und/oder einer Drosselungssteuerung in einer Speichersteuerung und/oder einer Prioritätswarteschlange des Managers virtueller Maschinen, die die Latenz von Betriebssystemaufrufen beeinflusst und/oder einer Hardwaresteuerung in einem Prozessor zur Steuerung der Eingangs- und Ausgangslatenz und/oder einer Hardwaresteuerung in einem Netzwerk-Port zur Steuerung von Uplink- und Downlink-Geschwindigkeiten, umfasst.

5. Verteiltes Speichersystem nach Anspruch 1, wobei, um einen Indikator für eine angestrebte Dienstgüte zu erhalten, das Erhalten des Indikators aus einem Menü umfasst, das einer Rechenvorrichtung des Benutzers präsentiert wird.

6. Verteiltes Speichersystem nach Anspruch 1, wobei, um von der angestrebten Dienstgüte zugeordneten angestrebten Leistungsmetriken zu bestimmen, das Bestimmen der angestrebten Leistungsmetriken umfasst, auf die angestrebten Leistungsmetriken in einem vordefinierten Satz von angestrebten Leistungsmetriken zuzugreifen, die durch angestrebte Dienstgüten indexiert sind.

7. Verfahren bei einem verteilten Speichersystem (110) (500), umfassend: einen Leistungsverwaltungsserver (140) in Kommunikation mit einer oder mehreren Rechenvorrichtungen (180), wobei das Verfahren umfasst:
Bestimmen (504), durch einen Prozessor (202) des Leistungsverwaltungsservers, von Fähigkeiten einer oder mehrerer Rechenvorrichtungen eines verteilten Speichersystems;
Erhalten (528), durch den Prozessor, eines Indikators einer angestrebten Dienstgüte, die von dem verteilten Speichersystem bereitgestellt werden soll;
Bestimmen (532), durch den Prozessor, von angestrebte Leistungsmetriken, die der angestrebten Dienstgüte zugeordnet sind;
Bestimmen (538), durch den Prozessor, von angestrebten Konfigurationseinstellungen für die eine oder mehrere Rechenvorrichtungen des verteilten Speichersystems, um die angestrebte Dienstgüte bereitzustellen;
Konfigurieren (542), durch den Prozessor, der einen oder mehreren Rechenvorrichtungen mit den angestrebten Konfigurationseinstellungen;
Bestimmen, durch den Prozessor, ob eine gegenwärtige Leistung des verteilten Speichersystems die angestrebte Dienstgüte erfüllt; und
Rekonfigurieren, durch den Prozessor, der einen oder mehreren Rechenvorrichtung(en) durch Anpassen der Konfigurationseinstellungen der einen oder mehreren Rechenvorrichtung(en) als Reaktion auf eine Bestimmung, dass die angestrebte Dienstgüte nicht erfüllt ist,
**dadurch gekennzeichnet, dass** das Konfigurieren ferner umfasst:
Bestimmen, durch den Prozessor, verschiedener Dienstklassen für verschiedene Objektspeicherdämonen des verteilten Speichersystems, basierend auf den bestimmten Fähigkeiten;
Bestimmen, durch den Prozessor, von Platzierungsgruppen der verschiedenen Dienstklassen, wobei jede Platzierungsgruppe einem der Objektspeicherdämonen zugeordnet ist; und
Konfigurieren (554) einer oder mehrerer Routing-Tabellen, um Datenobjekte basierend auf der angestrebten Dienstgüte an eine Platzierungsgruppe zu routen.

8. Verfahren nach Anspruch 7, wobei das Bestimmen der Fähigkeiten einer oder mehrerer Rechenvorrichtungen des verteilten Speichersystems das Bestimmen von Prozessorfähigkeiten und/oder, Netzwerkportfähigkeiten und/oder Speicherkapazitätsfähigkeiten umfasst.

9. Verfahren nach Anspruch 7, ferner umfassend das Identifizieren, durch den Prozessor, von verfügbaren Einstellungen, die der Dienstgüte von Hardware und Software jeder Rechenvorrichtung zugeordnet sind.

10. Verfahren nach Anspruch 9, wobei das Identifizieren der verfügbaren Einstellungen, das Identifizieren eines Dienstgüte-Flags in einem Festplattentreiber, der den Durchsatz und die Latenz beeinflusst und/oder, einer Drosselungssteuerung in einer Speichersteuerung und/oder eines Prioritätswarteschlange des Managers virtueller Maschinen, die die Latenz von Betriebssystemaufrufen beeinflusst und/oder einer Hardwaresteuerung in einem Prozessor zur Steuerung der Eingangs- und Ausgangslatenz und/oder einer Hardwaresteuerung in einem Netzwerk-Port zur Steuerung von Uplink- und Downlink-Geschwindigkeiten umfasst.

11. Verfahren nach Anspruch 7, wobei das Erhalten eines Indikators für eine angestrebte Dienstgüte, das Erhalten des Indikators aus einem Menü umfasst, das einer Rechenvorrichtung des Benutzers präsentiert wird.

12. Verfahren nach Anspruch 7, wobei das Bestimmen der der angestrebten Dienstgüte zugeordneten angestrebte Leistungsmetriken das Zugreifen, durch den Prozessor, auf die angestrebten Leistungsmetriken in einem vordefinierten Satz von angestrebten Leistungsmetriken umfasst, die durch angestrebte Dienstgüten indexiert sind.

13. Ein oder mehrere maschinenlesbare Speichermedien, umfassend eine Mehrzahl von darauf gespeicherten Anweisungen, die, wenn sie von einem Prozessor (202) eines Leistungsverwaltungsservers (140) in einem verteilten Speichersystem (110) ausgeführt werden, den Leistungsverwaltungsserver (140) veranlassen, das Verfahren nach einem der Ansprüche 7-12 durchzuführen.

## Revendications

1. Système de stockage distribué (110) comprenant :
un serveur de gestion des performances (140) en communication avec un ou plusieurs dispositifs de calcul (180), le serveur de gestion des performances (140) comprenant :
une mémoire (204) ;
un processeur (202) couplé à la mémoire ;
un module de détermination des capacités de performance (320) configuré pour déterminer les capacités d'un ou de plusieurs dispositifs de calcul (180) du système de stockage distribué (110) ;
un module de communication réseau (310) configuré pour obtenir un indicateur d'une qualité de service cible à fournir par le système de stockage distribué (110) ;
un module de détermination des paramètres de performance (330) configuré pour (i) déterminer des mesures de performance cibles associées à la qualité de service cible, (ii) déterminer des paramètres de configuration cibles pour les un ou plusieurs dispositifs de calcul (180) du système de stockage distribué afin de fournir la qualité de service cible, et (iii) configurer les un ou plusieurs dispositifs de calcul (180) avec les paramètres de configuration cibles ; et
un module de surveillance des performances (340) configuré pour (i) déterminer si les performances actuelles du système de stockage distribué satisfont à la qualité de service cible, et (ii) reconfigurer les un ou plusieurs dispositifs de calcul (180), en ajustant les paramètres de configuration des un ou plusieurs dispositifs de calcul, en réponse à la détermination que la qualité de service cible n'est pas satisfaite,
**caractérisé par le fait que** le serveur de gestion des performances (140), tout en configurant les un ou plusieurs dispositifs de calcul avec les paramètres de configuration cibles, est en outre configuré pour (i) déterminer différentes classes de service pour différents démons de stockage d'objets du système de stockage distribué (110), sur la base des capacités déterminées, (ii) déterminer des groupes de placement des différentes classes de service, chaque groupe de placement étant associé à l'un des démons de stockage d'objets, et (iii) configurer une ou plusieurs tables de routage pour acheminer les objets de données vers un groupe de placement, sur la base de la qualité de service cible.

2. Système de stockage distribué selon la revendication 1, dans lequel la détermination des capacités des un ou plusieurs dispositifs de calcul du système de stockage distribué comprend la détermination d'au moins une des capacités du processeur, des capacités du port réseau ou des capacités de la capacité de stockage.

3. Système de stockage distribué selon la revendication 1, dans lequel le module de détermination des paramètres de performance est en outre chargé d'identifier les paramètres disponibles associés à la qualité de service du matériel et du logiciel de chaque dispositif de calcul.

4. Système de stockage distribué selon la revendication 3, dans lequel l'identification des paramètres disponibles comprend l'identification d'au moins un élément parmi un indicateur de qualité de service dans un pilote de disque qui affecte le débit et la latence, un contrôle d'étranglement dans un contrôleur de stockage, une file d'attente prioritaire du gestionnaire de machine virtuelle qui affecte la latence des appels du système d'exploitation, un contrôle matériel dans un processeur pour contrôler la latence d'entrée et de sortie, ou un contrôle matériel dans un port de réseau pour contrôler les vitesses de liaison montante et descendante.

5. Système de stockage distribué selon la revendication 1, dans lequel l'obtention d'un indicateur d'une qualité de service cible comprend l'obtention de l'indicateur à partir d'un menu présenté à un dispositif de calcul de l'utilisateur.

6. Système de stockage distribué selon la revendication 1, dans lequel la détermination des mesures de performance cibles associées à la qualité de service cible comprend l'accès aux mesures de performance cibles dans un ensemble prédéfini de mesures de performance cibles qui sont indexées par les qualités de service cibles.

7. Procédé, au niveau d'un système de stockage distribué (110) (500) comprenant : un serveur de gestion des performances (140) en communication avec un ou plusieurs dispositifs de calcul (180), le procédé comprenant les étapes suivantes :
déterminer (504), par un processeur (202) du serveur de gestion des performances, les capacités d'un ou de plusieurs dispositifs de calcul d'un système de stockage distribué ;
obtenir (528), par le processeur, un indicateur d'une qualité de service cible à fournir par le système de stockage distribué ;
déterminer (532), par le processeur, des mesures de performance cibles associées à la qualité de service cible ;
déterminer (538), par le processeur, les paramètres de configuration cibles pour les un ou plusieurs dispositifs de calcul du système de stockage distribué afin de fournir la qualité de service cible ;
configurer (542), par le processeur, les un ou plusieurs dispositifs de calcul avec les paramètres de configuration cibles ;
déterminer, par le processeur, si une performance actuelle du système de stockage distribué satisfait à la qualité de service cible ; et
reconfigurer, par le processeur, les un ou plusieurs dispositifs de calcul en ajustant les paramètres de configuration des un ou plusieurs dispositifs de calcul, en réponse à la détermination que la qualité de service cible n'est pas satisfaite,
**caractérisé par le fait que** la configuration comprend en outre les étapes suivantes :
déterminer, par le processeur, différentes classes de service pour différents démons de stockage d'objets du système de stockage distribué, sur la base des capacités déterminées ;
déterminer, par le processeur, les groupes de placement des différentes classes de service, chaque groupe de placement étant associé à l'un des démons de stockage d'objets ; et
configurer (554) une ou plusieurs tables de routage pour acheminer les objets de données vers un groupe de placement sur la base de la qualité de service cible.

8. Procédé selon la revendication 7, dans lequel la détermination des capacités des un ou plusieurs dispositifs de calcul du système de stockage distribué comprend la détermination d'au moins un des éléments suivants : la capacités du processeur, les capacités du port réseau ou les capacités de la capacité de stockage.

9. Procédé selon la revendication 7 comprenant en outre l'identification, par le processeur, des paramètres disponibles associés à la qualité de service du matériel et du logiciel de chaque dispositif de calcul.

10. Procédé selon la revendication 9, dans lequel l'identification des paramètres disponibles comprend l'identification d'au moins un élément parmi un indicateur de qualité de service dans un pilote de disque qui affecte le débit et la latence, un contrôle d'étranglement dans un contrôleur de stockage, une file d'attente prioritaire du gestionnaire de machine virtuelle qui affecte la latence des appels du système d'exploitation, un contrôle matériel dans un processeur pour contrôler la latence d'entrée et de sortie, ou un contrôle matériel dans un port de réseau pour contrôler les vitesses de liaison montante et descendante.

11. Procédé selon la revendication 7, dans lequel l'obtention d'un indicateur d'une qualité de service cible comprend l'obtention de l'indicateur à partir d'un menu présenté à un dispositif de calcul de l'utilisateur.

12. Procédé selon la revendication 7, dans lequel la détermination des mesures de performance cibles associées à la qualité de service cible comprend l'accès, par le processeur, aux mesures de performance cibles dans un ensemble prédéfini de mesures de performance cibles qui sont indexées par les qualités de service cibles.

13. Un ou plusieurs supports de stockage lisibles par machine comprenant une pluralité d'instructions y étant stockées qui, lorsqu'elles sont exécutées par un processeur (202) d'un serveur de gestion des performances (140) dans un système de stockage distribué (110), amènent le serveur de gestion des performances (140) à exécuter le procédé de l'une quelconque des revendications 7 à 12.
